# EUROPEAN PATENT SPECIFICATION

(11) **EP 1 658 000 B1**
(45) Date of publication and mention of the grant of the patent: **28.07.2010**
(21) Application number: 04769786.7
(22) Date of filing: 30.07.2004
(51) Int. Cl.: A47J 31/06, A47J 31/40

(54) **A BEVERAGE MAKING DEVICE HAVING PROTRUSIONS AT THE UPPER WALL OF THE BREWING CHAMBER**
GETRÄNKEHERSTELLUNGSVORRICHTUNG MIT VORSPRÜNGEN AN DER OBEREN WAND DER AUFGUSSKAMMER
DISPOSITIF DE FABRICATION DE BOISSONS MUNI DE PROTUBERANCES AU NIVEAU DE LA PAROI SUPERIEURE DE LA CHAMBRE DE PREPARATION

(30) Priority: 18.08.2003 EP 03102580
(43) Date of publication of application: 24.05.2006
(73) Proprietor: Koninklijke Philips Electronics N.V., 5621 BA Eindhoven (NL)
(72) Inventor: D'HONT, Bernardus, P., G., NL-5656 AA Eindhoven (NL)
(74) Representative: Schouten, Marcus Maria
(86) International application number: PCT/IB2004/051337
(87) International publication number: WO 2005/016092

(56) References cited:
- EP-A- 0 870 457
- EP-A- 1 247 480
- WO-A-01/15582
- NL-C- 1 020 735
- US-A- 5 582 730
- US-A1- 2001 052 294

## Description

The invention relates to a beverage making device comprising a brewing chamber for enclosing a pad containing a substance from which the beverage is brewed, the brewing chamber having an upper wall with one or more holes through which heated water can enter the brewing chamber, which upper wall can hinge from a substantially horizontal brewing position, in which the upper wall is a portion of the wall of the brewing chamber into an open position in which the pad can be removed from the brewing chamber, whereby the surface of the upper wall is provided with protrusions having a height of more than 0.5 mm.

Such a device is described in WO-A-O1/15582. The described device comprises a water reservoir and means for heating the water and pumping it towards the holes in the upper wall of the brewing chamber, so that the heated water will enter the brewing chamber under pressure. The brewing chamber is filled with a pad containing a substance, for example ground coffee, and the heated water will pass through the pad, so that the coffee is extracted. After the extraction process, the liquid (coffee) leaves the brewing chamber through an outflow opening in the bottom of the brewing chamber and arrives in a liquid receiving chamber. The liquid receiving chamber comprises an outflow tube extending outside the device, so that the brewed liquid (coffee) can be caught by one or by two cups. The portion of the device comprising the upper wall of the brewing chamber can hinge upwards with respect to the stationary part of the brewing chamber to give access to the brewing chamber, so that a new pad can be placed for a next extraction process. In the upward position of said portion, the part of the device comprising the side wall and the lower wall of the brewing chamber (said stationary part) and the liquid receiving chamber can be removed from the device, for example for cleaning that part or for replacing the part by another, similar part in which the brewing chamber is larger, so that two pads can be placed in it in order to brew enough beverage for two cups instead of one cup.

A beverage can be made in an extraction process by means of the device, for example to produce coffee, or in a dissolving process, for example to produce a chocolate drink. In the case of an extraction process, the extracted substance will remain in the pad and the pad with the extracted substance must be removed from the chamber afterwards. In the case of a dissolving process, the substance in the pad will disappear during the brewing process, and the empty pad must be removed.

It was found in practice that the wet pad tends to stick to the upper wall when that upper wall is hinged into its open position. This is especially the case when two pads are placed in the brewing chamber: the upper pad then sticks to the upper wall, while the lower pad remains in the stationary part of the brewing chamber. Of course the pad can be removed by hand from the upper wall in its open position, but it is easier to remove the pad or the pads from the stationary part of the brewing chamber. Furthermore, the user of the device expects the pad to remain in the stationary part when he or she opens the brewing chamber and therefore may not notice a pad sticking to the upper wall.

The object of the invention is to provide a beverage making device as described above wherein the pad or, if two pads are present, both pads always remain in the stationary part of the brewing chamber when that chamber is opened.

To accomplish that objective, a substantial portion of the surface of said upper wall is provided with said protrusions, whereby the distance between every two neighboring protrusions being less than 12 mm, preferably less than 10 mm. Said substantial portion preferably accounts for more than 50% of the surface area of said upper wall, and in a preferred embodiment more than 75%. The protrusions may have the form of studs having more or less a cylindrical shape. The protrusions prevent the pad from sticking to the upper wall when the upper wall is hinged upward.

The device disclosed in WO-A-01/15582 is provided with six protrusions at the surface of the upper wall of the brewing chamber, which protrusions are located at considerable distances from each other. It was found in practice that the pad tends to stick to the hinging upper wall in the disclosed device, despite the presence of the protrusions. However, the tendency to stick can be decreased when certain dimensions of the protrusions are applied.

In one preferred embodiment, the distance between every two neighboring protrusions is less than 6 mm, and preferably the height of the protrusions is more than 0.7 mm, more preferably more that 1 mm.

In one preferred embodiment, the transverse section of the protrusions (i.e. the section parallel to the plane of the upper wall) is substantial circular, with a diameter between 0.5 mm and 3 mm, preferably between 1 mm and 2 mm.

Preferably, the distance between every two neighboring protrusions is less than eight times the height of the protrusions, preferably less than five times the height of the protrusions. The higher the protrusions, the greater the distance between the protrusions can be.

In one preferred embodiment, at least a portion of the side wall of a protrusion extends at an angle of more than 60°, preferably more than 75°, relative to the plane of said upper wall, and preferably a portion of each protrusion is substantial cylindrical.

In another preferred embodiment, the protrusions are ribs on the surface of the upper wall. These may be straight ribs, but the ribs may also be concentrically circular ribs. The ribs may also have the shape of circular arcs or the like.

To achieve a good access to the brewing chamber when that chamber is opened, said upper wall can hinge through more than 60°, preferably more than 70°, more preferably more than 80°.

In one preferred embodiment, a removable part comprising the part of the wall of the brewing chamber other than said upper wall is a portion of a removable part, and said removable part can be taken from the device in order to clean the brewing chamber or to remove the pad.

The invention also relates to a method of making a beverage by means of a beverage making device, wherein a pad containing a substance from which the beverage is to be brewed is placed in a brewing chamber, the brewing chamber having an upper wall with one or more holes through which heated water enters the brewing chamber, wherein said upper wall is hinged after the brewing process from a substantially horizontal brewing position in which the upper wall is a portion of the wall of the brewing chamber into an open position in which the pad can be removed, wherein a substantial portion of the surface of said upper wall is provided with protrusions having a height of more than 0.5 mm, and wherein the distance between every two neighboring protrusions is less than 12 mm, so that the pad will remain in the brewing chamber when the upper wall is hinged into its open position.

The invention will now be explained by means of a description of an embodiment of a device for making coffee, in which reference is made to the drawing, in which:
Fig. 1 is a sectional view of a portion of the device,
Fig. 2 shows the device with the brewing chamber in open position,
Fig. 3 is a sectional view of the upper wall of the brewing chamber,
Fig. 4 is a bottom view of the upper wall according to Fig. 3, and
Fig. 5 is a top view of the upper wall according to Fig. 3.

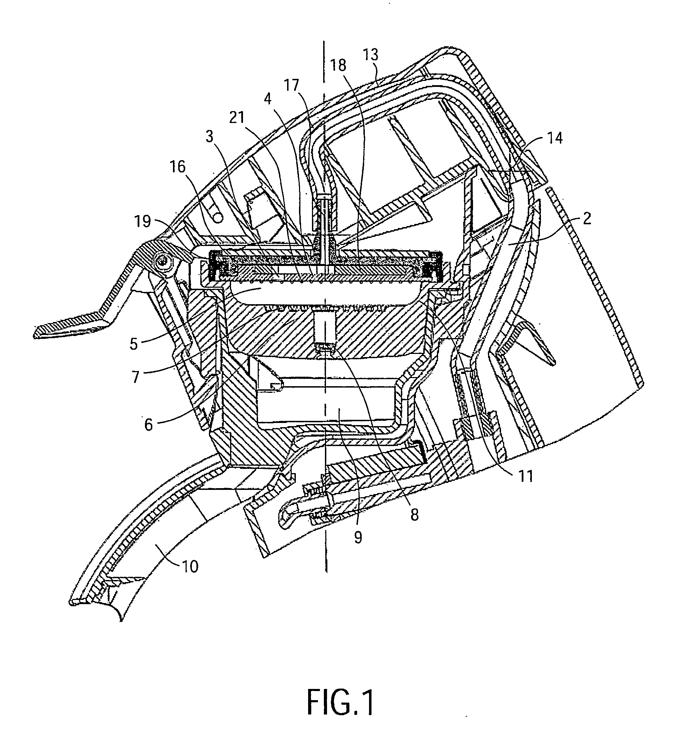

Fig. 1 shows the relevant portion (i.e. the uppermost portion) of a device for making coffee. The other portion of the device, which is not shown, comprises a water container and means for heating the water and pumping a predetermined quantity of the heated water through tube 2 to five holes 3 in the upper wall 4 of the brewing chamber 5. In the sectional view of Fig. 1, only one hole 3 in the upper wall 4 is shown. Brewing chamber 5 has a substantial cylindrical shape, and a disc-like pad (not shown) containing, for example, ground coffee fits in said chamber.

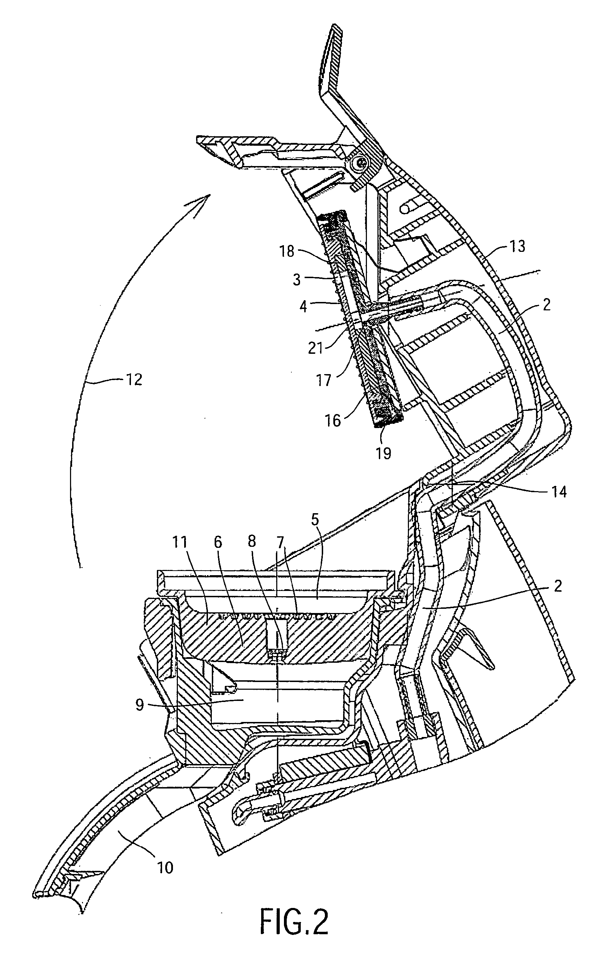

The lower wall 6 of the brewing chamber 5 is provided with a profile 7 so as to form channels for allowing the brewed coffee to arrive at the central part of the bottom of the brewing chamber 5, so that the liquid can flow to the outflow opening 8 in the lower wall 6. The brewed coffee is collected in a liquid receiving chamber 9 and subsequently guided through two outflow tubes 10 extending outside the device to a location where the brewed coffee can be caught by one or by two cups (not shown). There are two outflow tubes 10 parallel to each other, so that each outflow tube 10 can guide brewed coffee to one of two cups, which cups stand near each other. If only one cup is to be filled, both outflow tubes 10 will guide the brewed coffee to the same cup. Since the two outflow tubes 10 are located on either side of the plane of drawing, they are not visible in the sectional views of Fig. 1 and Fig. 2.

The brewing chamber 5 as shown in Fig. 1 has a dimension to accommodate a pad containing ground coffee for brewing coffee for one cup. If two cups of coffee are to be brewed, the part 11 of the device can be replaced by another part 11, which other part (not shown) comprises a thinner lower wall 6, so that the height of the brewing chamber 5 is increased and the brewing chamber 5 can accommodate two pads containing ground coffee, or a bigger pad, to brew enough coffee for two cups.

As is shown in Fig. 2 by arrow 12, the device can be opened by hinging the upper part 13 of the device about an axis 14. The upper wall 4 of the brewing chamber 5 is connected to said upper part 13, so that the brewing chamber 5 becomes accessible after opening. A used pad may then be removed and/or a new pad may be placed in the brewing chamber 5. If the next brewing process is to be performed with two pads, the open position of the brewing chamber allows the replacement of part 11 of the device by another one having a larger brewing chamber 5. To enable the hinging movement of the upper part 13, the tube 2 is made of a flexible material.

In the opened position of the device as shown in Fig. 2, the part of the device comprising the brewing chamber 5 (except for its upper wall 4), the liquid receiving chamber 9, and the outflow tubes 10 is removable from the device, so that the part can be cleaned.

The upper wall 4 of the brewing chamber 5 has a disc-like shape and is clamped in a connecting piece 16 comprising a central water duct 17 which is connected to tube 2, as is shown in Figs. 1 and 2. Between the upper wall 4 and the connecting piece 16 there is a distribution plate 18, having a disc-like shape and comprising recesses in the material to guide the heated water coming from the tube 2 and the water duct 17 to the five holes 3 in the upper wall 4. Around the connecting piece 16 there is a sealing ring 19 to provide a watertight sealing between the removable part 11 and the upper wall 4 when the brewing chamber 5 is closed (Fig. 1).

At the lower side of the upper wall 4, the main portion of the surface of the upper wall 4 is provided with protrusions 21. In this example, the height of the protrusions 21 is about 1 mm, and the distance between the protrusions 21 is about 4 mm.

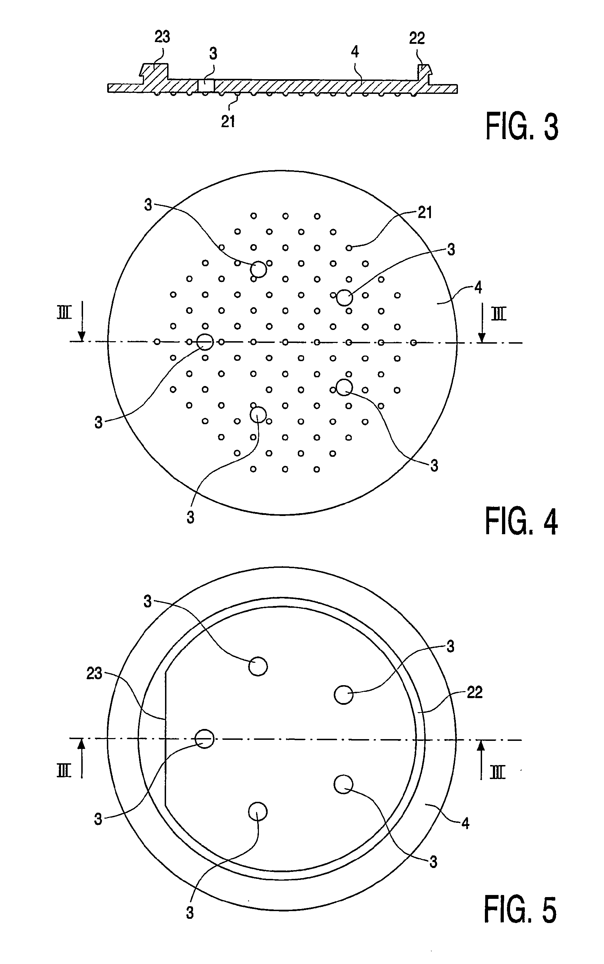

Fig. 3 is the same sectional view of the upper wall 4 of the brewing chamber 5 as is shown in Figs. 1 and 2, but on a larger scale. The upper wall 4 is made of a synthetic resin material. At its upper side, the upper wall 4 is provided with an annular protrusion 22 which can surround the distribution plate 18 and which clamps in the connecting piece 16.

Fig. 4 is a view of the lower side of the upper wall 4 and shows the distribution of the protrusions 21 over the lower side of the upper wall 4. Fig. 4, and also Fig. 5, furthermore show the locations of the five holes 3 in the upper wall 4.

Fig. 5 is a view of the upper side of the upper wall 4. The annular protrusion 22 is provided with a flat (straight) portion 23 corresponding to a flat portion at the edge of distribution plate 18, so that said distribution plate fits between the upper wall 4 and the connecting piece 16 in one position only.

The protrusions 21 at the lower side of the upper wall 4 of the brewing chamber 5 achieve that the wet pad will not stick to the upper wall 4 when the brewing chamber 5 is opened.

The embodiment as described above is only an example; a great many other embodiments are possible, including embodiments in which the protrusions 21 at the lower side of the upper wall 4 of the device have a different shape.

## Claims

1. A beverage making device comprising a brewing chamber (5) for enclosing a pad containing a substance from which the beverage is brewed, the brewing chamber (5) having an upper wall (4) with one or more holes (3) through which heated water can enter the brewing chamber (5), which upper wall (4) can hinge from a substantially horizontal brewing position in which the upper wall (4) is a portion of the wall of the brewing chamber (5) into an open position in which the pad can be removed from the brewing chamber (5), whereby the surface of the upper wall (4) is provided with protrusions (21) having a height of more than 0.5 mm, **characterized in that** a substantial portion of the surface of said upper wall (4) is provided with said protrusions (21), whereby the distance between every two neighboring protrusions (21) being less than 12 mm.

2. A beverage making device as claimed in claim 1, **characterized in that** the distance between every two neighboring protrusions (21) is less than 6 mm.

3. A beverage making device as claimed in any one of the preceding claims, **characterized in that** the height of the protrusions (21) is more than 0.7 mm, preferably more than 1 mm.

4. A beverage making device as claimed in any one of the preceding claims, **characterized in that** the transverse section of the protrusions (21) is substantial circular, with a diameter between 0.5 mm and 3 mm, preferably between 1 mm and 2 mm.

5. A beverage making device as claimed in any one of the preceding claims, **characterized in that** the distance between every two neighboring protrusions (21) is less than eight times the height of the protrusions (21), preferably less than five times the height of the protrusions (21).

6. A beverage making device as claimed in any one of the preceding claims, **characterized in that** at least a portion of the side wall of a protrusion (21) extends at an angle of more than 60°, preferably more than 75°, relative to the plane of said upper wall (4).

7. A beverage making device as claimed in any one of the preceding claims, **characterized in that** a portion of each protrusion (21) is substantially cylindrical.

8. A beverage making device as claimed in any one of claims 1 to 6, **characterized in that** the protrusions (21) are ribs on the surface of the upper wall (4).

9. A beverage making device as claimed in any one of the preceding claims, **characterized in that** said upper wall (4) can hinge through more than 60°, preferably more than 70°, more preferably more than 80°.

10. A beverage making device as claimed in any one of the preceding claims, **characterized by** a removable part comprising the part of the wall of the brewing chamber (5) other than said upper wall (4), which removable part can be taken from the device in order to clean the brewing chamber (5) or to remove the pad.

11. A method of making a beverage by means of a beverage making device, wherein a pad containing a substance from which the beverage is to be brewed is placed in a brewing chamber (5), said brewing chamber (5) having an upper wall (4) with one or more holes (3) through which heated water can enter the brewing chamber (5), wherein said upper wall (4) is hinged after the brewing process from a substantially horizontal brewing position in which the upper wall (4) is a portion of the wall of the brewing chamber (5) into an open position in which the pad is removed, whereby the surface of the upper wall (4) is provided with protrusions (21) having a height of more than 0.5 mm, **characterized in that** a substantial portion of the surface of said upper wall (4) is provided with such protrusions (21), the distance between every two neighboring protrusions (21) being less than 12 mm, so that the pad will remain in the brewing chamber (5) when the upper wall (4) is hinged into its open position.

## Patentansprüche

1. Getränkezubereitungsvorrichtung mit einer Brühkammer (5) zur Aufnahme eines Pads, welches eine Substanz enthält, aus der das Getränk gebrüht wird, wobei die Brühkammer (5) eine obere Wand (4) mit einem oder mehreren Löchern (3) aufweist, durch die erhitztes Wasser in die Brühkammer (5) gelangen kann, wobei die obere Wand (4) von einer im Wesentlichen horizontalen Brühposition, in der die obere Wand (4) einen Teil der Wand der Brühkammer (5) bildet, in eine geöffnete Position, in der das Pad aus der Brühkammer (5) entfernt werden kann, schwenkbar ist, wobei die Oberfläche der oberen Wand (4) mit Vorsprüngen (21) mit einer Höhe von mehr als 0,5 mm versehen ist, **dadurch gekennzeichnet, dass** ein wesentlicher Teil der Oberfläche der oberen Wand (4) mit den Vorsprüngen (21) versehen ist, wobei der Abstand zwischen jeweils zwei benachbarten Vorsprüngen (21) weniger als 12 mm beträgt.

2. Getränkezubereitungsvorrichtung nach Anspruch 1, **dadurch gekennzeichnet, dass** der Abstand zwischen jeweils zwei benachbarten Vorsprüngen (21) weniger als 6 mm beträgt.

3. Getränkezubereitungsvorrichtung nach einem der vorangegangenen Ansprüche, **dadurch gekennzeichnet, dass** die Höhe der Vorsprünge (21) mehr als 0,7 mm, vorzugsweise mehr als 1 mm, beträgt.

4. Getränkezubereitungsvorrichtung nach einem der vorangegangenen Ansprüche, **dadurch gekennzeichnet, dass** der Querschnitt der Vorsprünge (21), mit einem Durchmesser zwischen 0,5 mm und 3 mm, vorzugsweise zwischen 1 mm und 2 mm, im Wesentlichen kreisförmig ist.

5. Getränkezubereitungsvorrichtung nach einem der vorangegangenen Ansprüche, **dadurch gekennzeichnet, dass** der Abstand zwischen jeweils zwei benachbarten Vorsprüngen (21) weniger als achtmal die Höhe der Vorsprünge (21), vorzugsweise weniger als fünfmal die Höhe der Vorsprünge (21), ausmacht.

6. Getränkezubereitungsvorrichtung nach einem der vorangegangenen Ansprüche, **dadurch gekennzeichnet, dass** sich zumindest ein Teil der Seitenwand eines Vorsprungs (21) in einem Winkel von mehr als 60°, vorzugsweise mehr als 75°, relativ zu der Ebene der oberen Wand (4) erstreckt.

7. Getränkezubereitungsvorrichtung nach einem der vorangegangenen Ansprüche, **dadurch gekennzeichnet, dass** ein Teil jedes Vorsprungs (21) im Wesentlichen zylindrisch ist.

8. Getränkezubereitungsvorrichtung nach einem der Ansprüche 1 bis 6, **dadurch gekennzeichnet, dass** die Vorsprünge (21) durch Rippen auf der Oberfläche der oberen Wand (4) dargestellt sind.

9. Getränkezubereitungsvorrichtung nach einem der vorangegangenen Ansprüche, **dadurch gekennzeichnet, dass** die obere Wand (4) um mehr als 60°, noch besser um mehr als 70°, am besten um mehr als 80°, schwenkbar ist.

10. Getränkezubereitungsvorrichtung nach einem der vorangegangenen Ansprüche, **gekennzeichnet durch** einen entfernbaren Teil, der neben der oberen Wand (4) den Teil der Wand der Brühkammer (5) umfasst, wobei der entfernbare Teil von der Vorrichtung abgenommen werden kann, um die Brühkammer (5) zu reinigen oder das Pad zu entfernen.

11. Verfahren zum Zubereiten eines Getränks mit Hilfe einer Getränkezubereitungsvorrichtung, wobei ein Pad, welches eine Substanz enthält, aus der das Getränk zu brühen ist, in einer Brühkammer (5) platziert wird, wobei die Brühkammer (5) eine obere Wand (4) mit einem oder mehreren Löchern (3) aufweist, durch die erhitztes Wasser in die Brühkammer (5) gelangen kann, wobei die obere Wand (4) nach dem Brühvorgang aus einer im Wesentlichen horizontalen Brühposition, in der die obere Wand (4) einen Teil der Wand der Brühkammer (5) bildet, in eine geöffnete Position geschwenkt wird, in der das Pad entfernt wird, wobei die Oberfläche der oberen Wand (4) mit Vorsprüngen (21) mit einer Höhe von mehr als 0,5 mm versehen ist, **dadurch gekennzeichnet, dass** ein wesentlicher Teil der Oberfläche der oberen Wand (4) mit solchen Vorsprüngen (21) versehen ist, wobei der Abstand zwischen jeweils zwei benachbarten Vorsprüngen (21) weniger als 12 mm beträgt, so dass das Pad in der Brühkammer (5) verbleibt, wenn die obere Wand in ihre geöffnete Position geschwenkt wird.

## Revendications

1. Dispositif de fabrication de boissons comprenant une chambre de préparation (5) pour entourer une dosette contenant une substance à partir de laquelle la boisson est préparée, la chambre de préparation (5) ayant une paroi supérieure (4) avec un ou plusieurs orifices (3) à travers lesquels l'eau chauffée peut pénétrer dans la chambre de préparation (5), laquelle paroi supérieure (4) peut pivoter d'une position de préparation essentiellement horizontale dans laquelle la paroi supérieure (4) est une partie de la paroi de la chambre de préparation (5) à une position ouverte dans laquelle la dosette peut être retirée de la chambre de préparation (5), la surface de la paroi supérieure (4) étant munie de protubérances (21) d'une hauteur supérieure à 0,5 mm, **caractérisé en ce qu'**une partie substantielle de la surface de ladite paroi supérieure (4) est munie desdites protubérances (21), la distance entre deux protubérances voisines (21) étant inférieure à 12 mm.

2. Dispositif de fabrication de boissons selon la revendication 1, **caractérisé en ce que** la distance entre deux protubérances voisines (21) est inférieure à 6 mm.

3. Dispositif de fabrication de boissons selon l'une quelconque des revendications précédentes, **caractérisé en ce que** la hauteur des protubérances (21) est supérieure à 0,7 mm, de préférence supérieure à 1 mm.

4. Dispositif de fabrication de boissons selon l'une quelconque des revendications précédentes, **caractérisé en ce que** la section transversale des protubérances (21) est essentiellement circulaire, avec un diamètre compris entre 0,5 mm et 3 mm, de préférence entre 1 mm et 2 mm.

5. Dispositif de fabrication de boissons selon l'une quelconque des revendications précédentes, **caractérisé en ce que** la distance entre deux protubérances voisines (21) est inférieure à huit fois la hauteur des protubérances (21), de préférence inférieure à cinq fois la hauteur des protubérances (21).

6. Dispositif de fabrication de boissons selon l'une quelconque des revendications précédentes, **caractérisé en ce qu'**au moins une partie de la paroi latérale d'une protubérance (21) s'étend à un angle supérieur à 60°, de préférence supérieur à 75°, par rapport au plan de ladite paroi supérieure (4).

7. Dispositif de fabrication de boissons selon l'une quelconque des revendications précédentes, **caractérisé en ce qu'**une partie de chaque protubérance (21) est essentiellement cylindrique.

8. Dispositif de fabrication de boissons selon l'une quelconque des revendications 1 à 6, **caractérisé en ce que** les protubérances (21) sont des nervures sur la surface de la paroi supérieure (4).

9. Dispositif de fabrication de boissons selon l'une quelconque des revendications précédentes, **caractérisé en ce que** ladite paroi supérieure (4) peut pivoter sur plus de 60°, de préférence plus de 70°, de manière davantage préférée plus de 80°.

10. Dispositif de fabrication de boissons selon l'une quelconque des revendications précédentes, **caractérisé par** une partie amovible comprenant la partie de la paroi de la chambre de préparation (5) autre que ladite paroi supérieure (4), laquelle partie amovible peut être retirée du dispositif afin de nettoyer la chambre de préparation (5) ou retirer la dosette.

11. Procédé de fabrication d'une boisson à l'aide d'un dispositif de fabrication de boissons, dans lequel une dosette contenant une substance à partir de laquelle la boisson doit être préparée est placée dans une chambre de préparation (5), ladite chambre de préparation (5) ayant une paroi supérieure (4) avec un ou plusieurs orifices (3) à travers lesquels l'eau chauffée peut pénétrer dans la chambre de préparation (5), dans lequel ladite partie supérieure (4) pivote après le processus de préparation d'une position de préparation essentiellement horizontale dans laquelle la paroi supérieure (4) est une partie de la paroi de la chambre de préparation (5) à une position ouverte dans laquelle la dosette est retirée, la surface de la paroi supérieure (4) étant munie de protubérances (21) d'une hauteur supérieure à 0,5 mm, **caractérisé en ce qu'**une partie substantielle de la surface de ladite paroi supérieure (4) est munie de telles protubérances (21), la distance entre deux protubérances voisines (21) étant inférieure à 12 mm, de sorte que la dosette reste dans la chambre de préparation (5) lorsque la paroi supérieure (4) pivote vers sa position ouverte.
